# EUROPEAN PATENT APPLICATION

(11) **EP 3 731 327 A1**
(43) Date of publication of application: **28.10.2020**
(21) Application number: 20712430.6
(22) Date of filing: 12.03.2020
(51) Int. Cl.: H01M 10/0525, H01M 2/10

(54) **ELECTROCHEMICAL ENERGY STORAGE DEVICE**

(30) Priority: 14.03.2019 CN 201920325989 U
(71) Applicant: Ningde Amperex Technology Ltd., Ningde City, Fujian (CN)
(72) Inventor: The designation of the inventor has not yet been filed
(74) Representative: CMS Cameron McKenna Nabarro Olswang LLP
(86) International application number: PCT/CN2020/079031
(87) International publication number: WO 2020/182191

(57) **Abstract**

The present disclosure provides an electrochemical energy storage device including a housing. The housing includes a first side wall and a second side wall opposite to the first side wall, and defines a chamber configured for receiving a battery cell. The chamber is between the first side wall and the second side wall. At least one of the first side wall and the second side wall carries a reinforcing layer. The reinforcing layer improves the structural strength of the housing. When the electrochemical energy storage device is dropped or impacted, the reinforcing layer protects the housing, thereby avoiding a short circuit of the electrochemical energy storage device or leakage of the electrolyte, thereby improving the safety and reliability of the electrochemical energy storage device.

## Description

### FIELD

The subject matter herein generally relates to the field of energy storage devices, in particular, to an electrochemical energy storage device.

### BACKGROUND

In the related art, during the use of an electrochemical energy storage device (such as a lithium battery), when the device is dropped or bumped, it is easy to cause cracks in the pocket of the electrochemical energy storage device, which affects the safety and reliability of the chemical energy storage devices.

### SUMMARY

An object of the present disclosure is to provide an electrochemical energy storage device which are safe and reliable.

An electrochemical energy storage device according to an embodiment of the present disclosure comprises a housing. The housing comprises a first side wall and a second side wall opposite to the first side wall, and defines a chamber configured for receiving a battery cell. The chamber is located between the first side wall and the second side wall. At least one of the first side wall and the second side wall carries a reinforcing layer.

In the electrochemical energy storage device of the present disclosure, at least one of the first side wall and the second side wall carries the reinforcing layer, the reinforcing layer improves the structural strength of the housing. When the electrochemical energy storage device is dropped or impacted, the reinforcing layer has a protective effect on the housing, thereby avoiding a short circuit of the electrochemical energy storage device or leakage of the electrolyte, thereby improving the safety and reliability of the electrochemical energy storage device.

According to some embodiments of the present disclosure, the electrochemical energy storage device further comprises the battery cell. An electrode tab of the battery cell protrudes out of the chamber from the first side wall, the reinforcing layer is arranged on the second side wall.

According to some embodiments of the present disclosure, the reinforcing layer is arranged on a surface of the second side wall facing the chamber.

According to some embodiments of the present disclosure, the reinforcing layer is arranged on a surface of the second side wall far away from the chamber.

According to some embodiments of the present disclosure, the reinforcing layer is arranged on a surface of the first side wall far away from the chamber.

According to some embodiments of the present disclosure, the housing comprises a third side wall, the third side wall is adjacent to the second side wall, and the reinforcing layer is arranged on a surface of the third side wall far away from the chamber.

According to some embodiments of the present disclosure, the reinforcing layer is a polymer layer.

According to some embodiments of the present disclosure, the reinforcing layer is an adhesive tape.

According to some embodiments of the present disclosure, the battery cell has a width of LI, and the reinforcing layer has a length of L2 in the width direction of the battery cell , where L2 ≥ 0.5L1.

According to some embodiments of the present disclosure, the electrochemical energy storage device is a battery.

### BRIEF DESCRIPTION OF THE DRAWINGS

These and other aspects and advantages of embodiments of the present disclosure will become apparent and more readily appreciated from the descriptions made with reference to the figures.
FIG. 1 is a schematic view of a first embodiment of an electrochemical energy storage device according to the present disclosure.
FIG. 2 is a schematic view of a second embodiment of an electrochemical energy storage device according to the present disclosure.
FIG. 3 is a schematic view of a third embodiment of an electrochemical energy storage device according to the present disclosure.
FIG. 4 is a schematic view of a fourth embodiment of an electrochemical energy storage device according to the present disclosure.
FIG. 5 is a schematic view of a fifth embodiment of an electrochemical energy storage device according to the present disclosure.
FIG. 6 is a schematic view of a sixth embodiment of an electrochemical energy storage device according to the present disclosure.
FIG. 7 is a schematic view of a seventh embodiment of an electrochemical energy storage device according to the present disclosure.
FIG. 8 is a schematic view of an eighth embodiment of an electrochemical energy storage device according to the present disclosure.
FIG. 9 is a schematic view of a ninth embodiment of an electrochemical energy storage device according to the present disclosure.
FIG. 10 is a schematic view of a tenth embodiment of an electrochemical energy storage device according to the present disclosure.
FIG. 11 is a schematic view of an eleventh embodiment of an electrochemical energy storage device according to the present disclosure.

### DETAILED DESCRIPTION

Embodiments of the present application will be described in detail and examples of the embodiments will be illustrated in the drawings, where same or similar reference numerals are used to indicate same or similar elements or elements with same or similar functions. The embodiments described herein with reference to drawings are explanatory, illustrative, and used to generally understand the present application. The embodiments shall not be construed to limit the present application.

The electrochemical device 100 according to an embodiment of the present disclosure is described with reference to figures.

### EXAMPLE 1

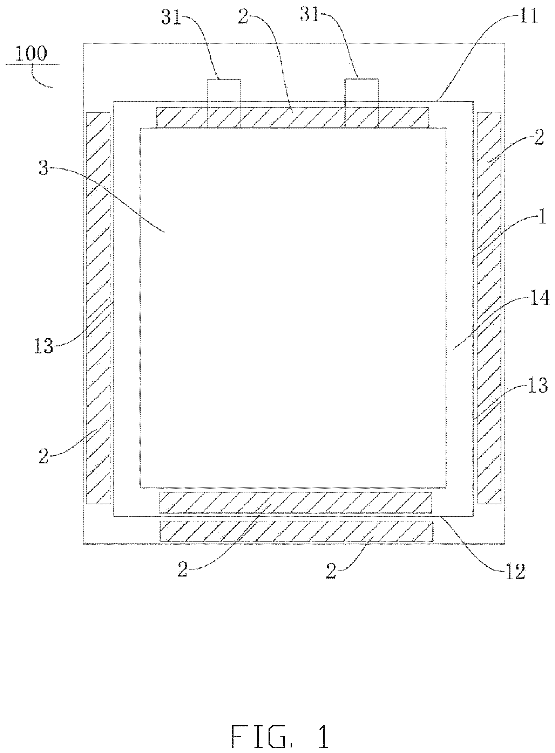

As shown in FIG. 1, the electrochemical energy storage device 100 includes a housing 1 and a battery cell 3. The housing 1 includes a first side wall 11, a second side wall 12, and a third side wall 13, wherein the first side wall 11 and the second side wall 12 are opposite to each other, and the third side wall 13 is adjacent to the second side wall 12. The housing 1 defines a chamber 14 for receiving the battery cell 3. The chamber 14 is located between the first side wall 11 and the second side wall 12. At least one of the first side wall 11 and the second side wall 12 carries a reinforcing layer 2.

The reinforcing layer 2 improves the structural strength of the housing 1. When the electrochemical energy storage device 100 is dropped or impacted, the reinforcing layer 2 has a protective effect on the housing 1, thereby avoiding a short circuit of the electrochemical energy storage device 100 or leakage of the electrolyte, thereby improving the safety and reliability of the electrochemical energy storage device 100.

In the related art, when an electrochemical energy storage device100 is dropped or impacted, the external impact force received by the electrochemical energy storage device is likely to crack or damage the housing, causing leakage of the electrolyte. The external impact force may also cause collision between the internal electrolyte and the housing, and collision between the electrode plate and the housing, which causes damage to the housing, thereby affecting the safety and reliability of the electrochemical energy storage device. In the present disclosure, by providing the reinforcing layer 2 on at least one of the first side wall 11 and the second side wall, the structural strength of the housing 1 is improved, so that the safety and reliability of the electrochemical energy storage device 100 are improved.

As shown in FIG. 1, the reinforcing layer 2 is arranged on a surface of the first side wall 1 facing the chamber 14. Therefore, the structural strength of a side of the first side wall 11 close to the chamber 14 is increased, and the ability of the first side wall 11 to resist the impact of the electrolyte is reinforced.

As shown in FIG. 1, an electrode tab 31 of the battery cell 3 protrudes out of the chamber 14 from the first side wall 11, and the reinforcing layer 2 is arranged on the second side wall 12. The reinforcing layer 2 improves the structural strength of the second side wall 12 and prevents the second side wall 12 from cracking. In addition, the reinforcing layer 2 is arranged on the second side wall 12, thus a receiving space for receiving the reinforcing layer 2 is easier to design and manufacture, and a processing cost can be reduced. Preferably, the reinforcing layer 2 defines a through hole for the electrode tab 31 to pass through.

It should be understood that the battery cell 3 includes electrode plates and separator. The electrode plates further include negative electrode plate and positive electrode plate, and the separator is located between the negative electrode plate and the positive electrode plate. The negative electrode plate, the separator, and the positive electrode plate are stacked or wound to form the battery cell 3. Specifically, when manufacturing the battery cell 3, first, a polyethylene porous film can be used as a substrate, and a fluffing agent can be used to perform a surface pretreatment on the substrate at a certain temperature to increase the surface tension of the substrate, and then the inorganic oxide (alumina, silica, etc.) and organic polymer (polyvinylidene fluoride) solutions are evenly coated on the surface of the substrate to obtain the separator.

Then, the positive electrode plate, the negative electrode plate, and the separator are wound in an order to form a bare cell. The bare cell and the electrolyte are built into the housing 1, and the electrolyte is infiltrated into the bare cell to form the battery cell 3. Finally, the battery cell 3 is hot pressed to create a bonding between electrode plates and separator.

As shown in FIG. 1, the reinforcing layer 2 is arranged on a surface of the second side wall close to the chamber 14. The structural strength of a side of the second side wall 12 close to the chamber 14 is improved by the reinforcing layer 2, so that the ability of the second side wall 12 to resist the impact of the electrolyte is improved, thereby preventing the electrolyte from leaking.

As shown in FIG. 1, the reinforcing layer 2 is arranged a surface of the second side wall 12 far away from the chamber 14. The structural strength of the outer surface of the second side wall 12 is enhanced by the reinforcing layer 2, increasing the ability of the second side wall 12 to resist the external impact, thus cracks in the second side wall 12 can be avoided.

As shown in FIG.1, the housing 1 includes the third side wall 13, the third side wall 13 is adjacent to the second side wall 12, and the reinforcing layer 2 is arranged on a surface of the third side wall 13 far away from the chamber 14. The reinforcing layer 2 has a protective effect on the third side wall 13 of the housing 1. By providing the reinforcing layer 2 on the surface of the third side wall 13 away from the inner cavity 14, leakage of the electrolyte at the third side wall 13 can be avoided, thereby the safety and reliability of the electrochemical energy storage device 100 can be further improved.

As shown in FIG. 1, the housing 1 includes the first side wall 11, the second side wall 12, and two third side walls 13. The first side wall 11 and the second side wall 12 are opposite to each other, and the two third side walls 13 are opposite to each other. An end of the left-hand third side wall 13 is connected to an end of the first side wall 11, other end of the left-hand third side wall 13 is connected to an end of the second side wall 12. An end of the right-hand side wall 13 is connected to other end of the first side wall 11, and other end of the right-hand side wall 13 is connected to other end of the second side wall 12.

The surface of the left-hand third side wall 13 away from the chamber 14 and the surface of the right-hand side wall 13 away from the chamber 14 both carry the reinforcing layer 2.

### EXAMPLE 2

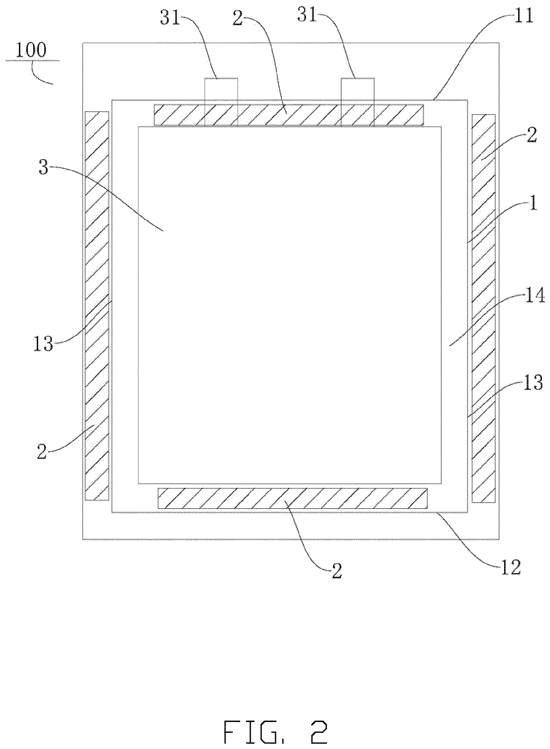

The structure of this embodiment is substantially the same as that of the first embodiment, the same elements are labeled by the same reference numerals, as shown in FIG. 2, except that the reinforcing layer 2 is applied only to the surface of the first side wall 11 close to the chamber 14, the surface of the second side wall 12 close to the chamber 14, the surface of the left-hand side wall 13 away from the chamber 14, and the surface of the right-hand side wall 13 away from the chamber 14.

### EXAMPLE 3

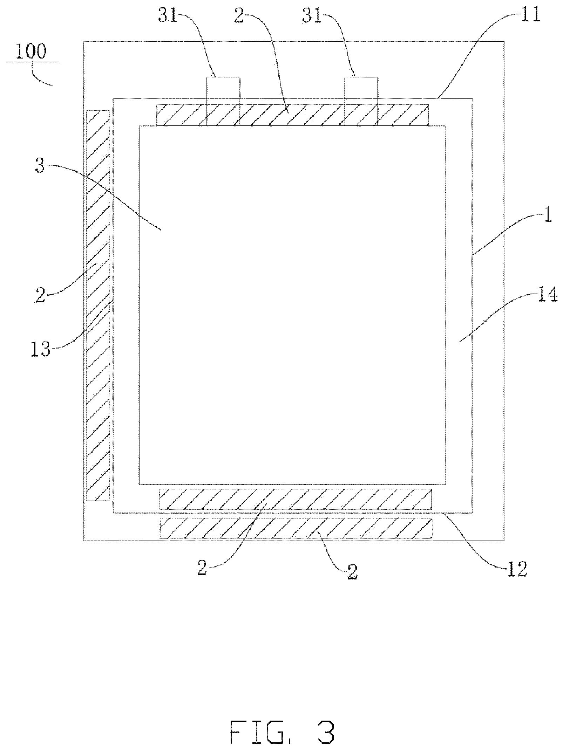

The structure of this embodiment is substantially the same as that of the first embodiment, in which the same elements are labeled by the same reference numerals, as shown in FIG. 3, except that the reinforcing layer 2 is applied only to the surface of the first side wall 11 close to the chamber 14, the surface of the second side wall 12 close to the chamber 14, the surface of the second side wall 12 away from the chamber 14, and the surface of the left-hand side wall 13 away from the chamber 14.

### EXAMPLE 4

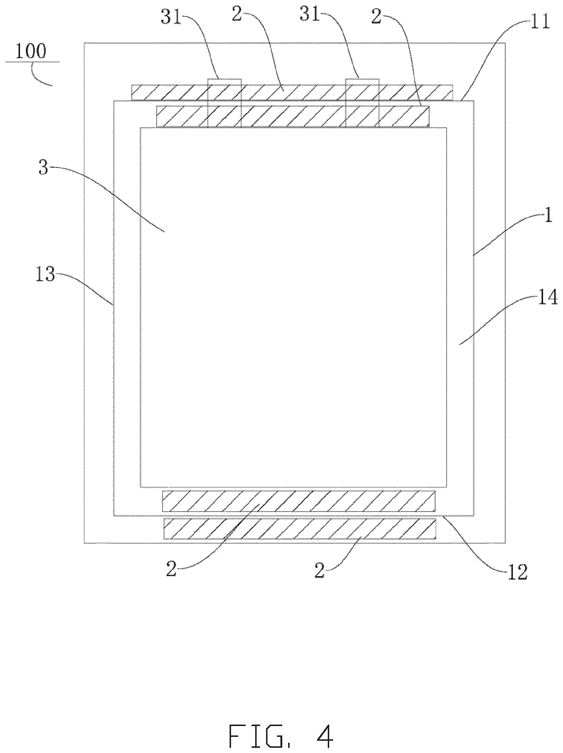

The structure of this embodiment is substantially the same as that of the first embodiment, in which the same elements are labeled by the same reference numerals, as shown in FIG. 4, except that the reinforcing layer 2 is applied only to the surface of the first side wall 11 close to the chamber 14, the surface of the first side wall 11 away from the chamber 14, the surface of the second side wall 12 close to the chamber 14, and the surface of the second side wall 12 away from the chamber 14.

The reinforcing layer 2 is applied to the surface of the first side wall 11 away from the chamber 14, thus the structural strength of the outer surface of the first side wall 11 can be improved, and the ability of the first side wall 11 to resist the external impact can be improved.

### EXAMPLE 5

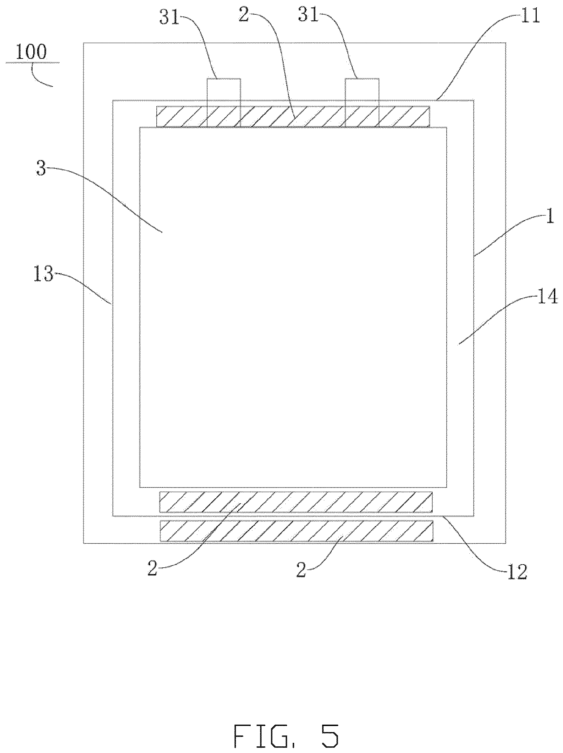

The structure of this embodiment is substantially the same as that of the first embodiment, in which the same elements are labeled by the same reference numerals, as shown in FIG. 5, except that the reinforcing layer 2 is applied only to the surface of the first side wall 11 close to the chamber 14, the surface of the second side wall 12 close to the chamber 14, and the surface of the second side wall 12 away from the chamber 14.

### EXAMPLE 6

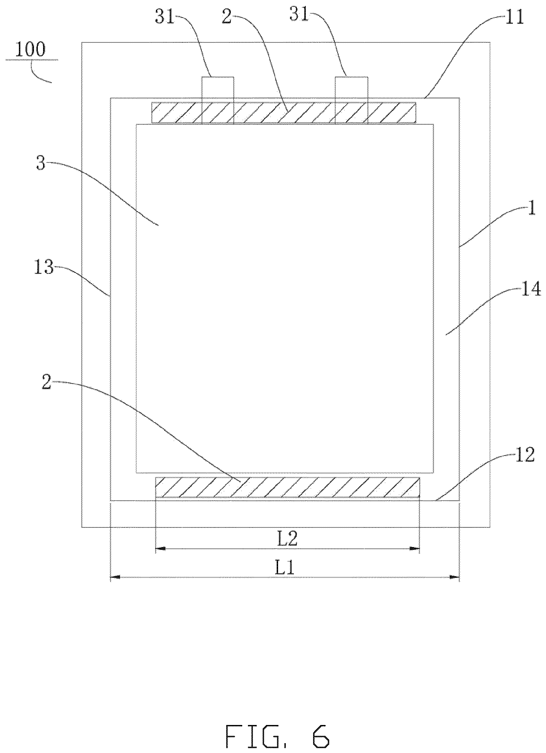

The structure of this embodiment is substantially the same as that of the first embodiment, in which the same elements are labeled by the same reference numerals, as shown in FIG. 6, except that the reinforcing layer 2 is applied only to the surface of the first side wall 11 close to the chamber 14 and the surface of the second side wall 12 close to the chamber 14.

### EXAMPLE 7

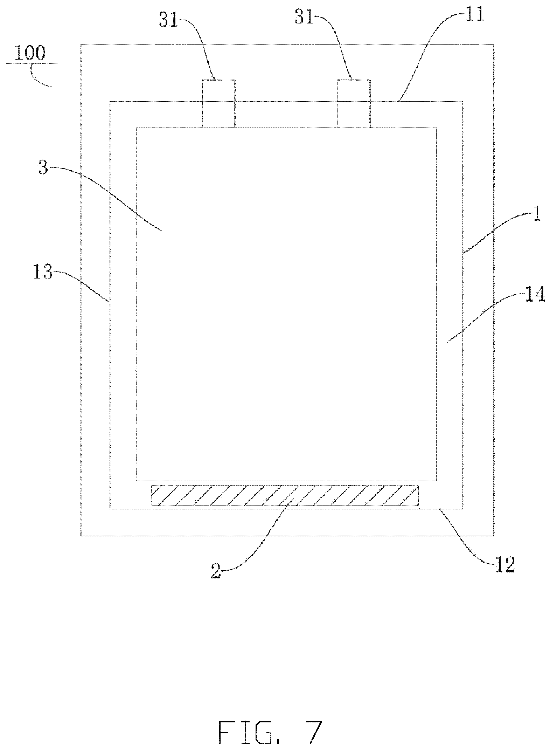

The structure of this embodiment is substantially the same as that of the first embodiment, in which the same elements are labeled by the same reference numerals, as shown in FIG. 7, except that the reinforcing layer 2 is applied only to the surface of the second side wall 12 away from the chamber 14.

### EXAMPLE 8

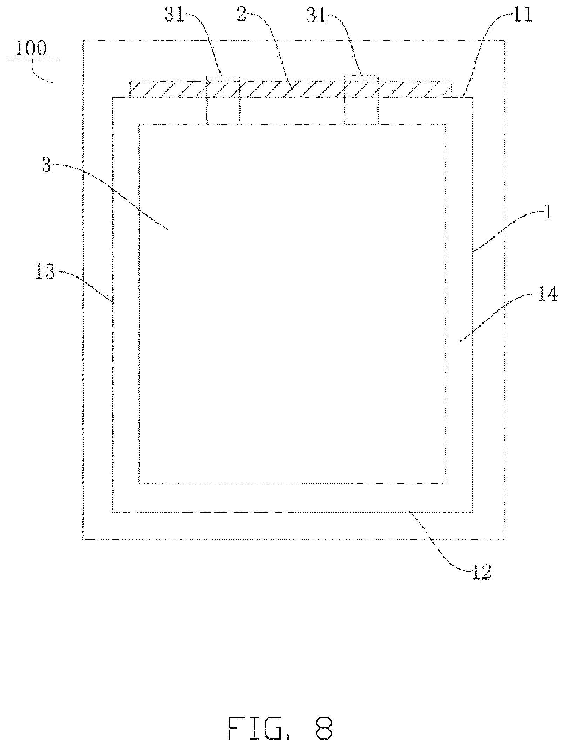

The structure of this embodiment is substantially the same as that of the first embodiment, in which the same elements are labeled by the same reference numerals, as shown in FIG. 8, except that the reinforcing layer 2 is applied only to the surface of the first side wall 11 away from the chamber 14.

### EXAMPLE 9

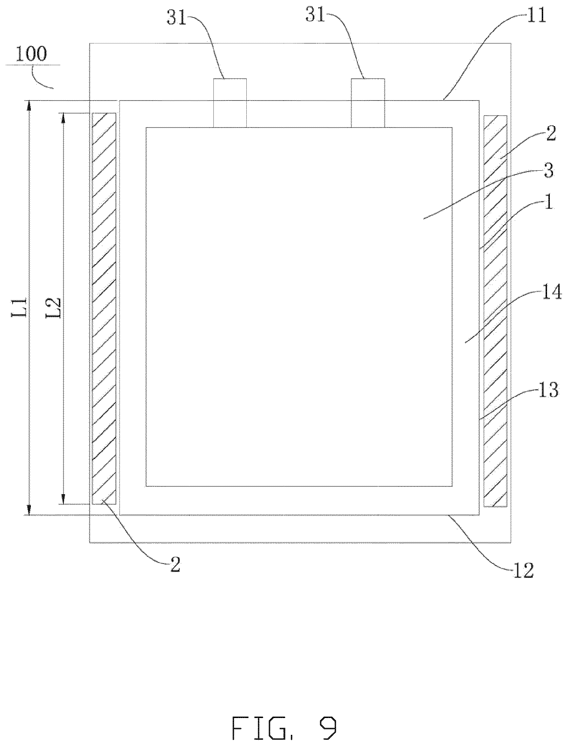

The structure of this embodiment is substantially the same as that of the first embodiment, in which the same elements are labeled by the same reference numerals, as shown in FIG. 9, except that the reinforcing layer 2 is applied only to the surface of the left-hand third side wall 13 away from the chamber 14 and the surface of the right-hand third side wall 13 away from the chamber 14.

### EXAMPLE 10

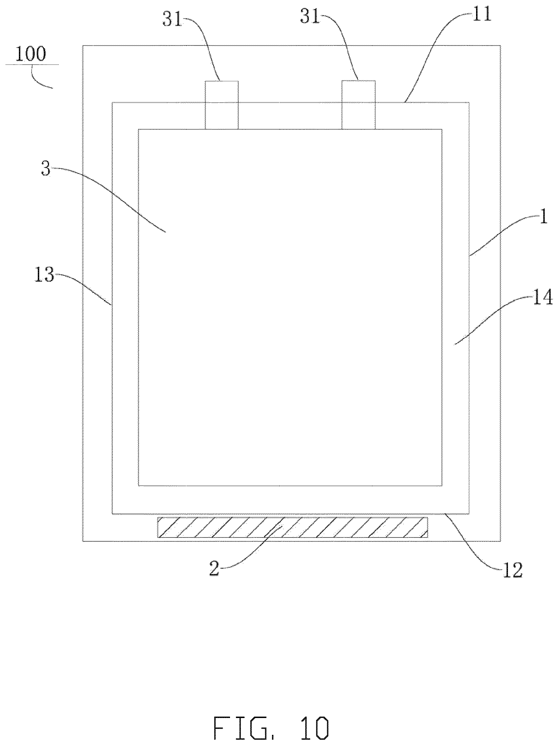

The structure of this embodiment is substantially the same as that of the first embodiment, in which the same elements are labeled by the same reference numerals, as shown in FIG. 10, except that the reinforcing layer 2 is applied only to the surface of the second side wall 12 close to the chamber 14.

### EXAMPLE 11

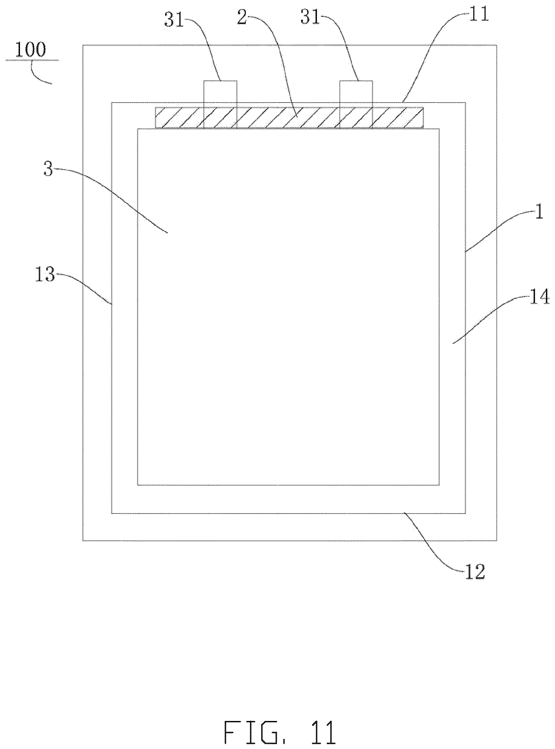

The structure of this embodiment is substantially the same as that of the first embodiment, in which the same elements are labeled by the same reference numerals, as shown in FIG. 11, except that the reinforcing layer 2 is applied only to the surface of the first side wall 11 close to the chamber 14.

It is to be understood, reference throughout this specification to "an embodiment," "some embodiments," "an exemplary embodiment," "an example," "a specific example," or "some examples," means that a particular feature, structure, material, or characteristic described in connection with the embodiment or example is included in at least one embodiment or example of the present application. Thus, the appearances of these phrases throughout this specification do not necessarily refer to the same embodiment or example. Furthermore, the particular features, structures, materials, or characteristics may be combined in any suitable manner in one or more embodiments or examples.

In addition, the above embodiments are exemplary, and the electrochemical energy storage device 100 of this embodiment of the present disclosure also have the following features.

According to some embodiments of the present disclosure, the reinforcing layer 2 is a polymer layer. The manufacturing process of the polymer layer is a mature technology, the manufacturing cost is low, the chemical properties of the polymer layer are relatively stable, it is generally resistant to acid and alkali corrosion, and the service life is long.

Alternatively, the polymer layer may be ethylene-acetic acid copolymer (EVA) hot-melt adhesive, polyamide (PA) hot-melt adhesive, polyurethane (PU) hot-melt adhesive, polyurethane, epoxy resin, polyacrylate, polyurea, or polycarbonate. Each of the ethylene-acetic acid copolymer (EVA) hot melt adhesive, polyamide (PA) hot melt adhesive, polyurethane (PU) hot melt adhesive, polyurethane, epoxy resin, polyacrylate, polyurea, and polycarbonate has strong stickiness after physical heating or chemical polymerizing. Specifically, the polymer layer may be one of the above materials, or a mixture of more materials thereof.

In the physical heating process, the heating temperature is 60-160°C. Preferably, the heating temperature is 80-100°C, and the response time is 1-30 minutes. Preferably, the response time is 1-4 minutes.

In the related art, when an electrochemical energy storage device 100 is dropped or impacted, the electrode plates inside the electrochemical can slide against each other to cause an internal short circuit. In addition, the electrolyte of the electrochemical energy storage device can also impact the separator, and the separator easily shrinks to cause an internal short circuit.

As shown in FIG. 1, in an exemplary embodiment of the present disclosure, the surface of the first side wall 11 facing the chamber 14 is coated with bonding glue, forming the polymer layer on the surface of the first side wall 11 close to the chamber. By using the bonding force of the above polymer layer, the integrity of the electrode plates, the separator, and the housing 1 is improved, and internal short circuit caused by sliding of the electrode plate relative to each other or the shrinkage of the separator is much less likely, the housing 1 can also be prevented from cracking at the same time.

As shown in FIG. 7, in other exemplary embodiment of the present disclosure, the surface of the second side wall 12 facing the chamber 14 is coated with bonding glue, forming the polymer layer on the surface of the second side wall 12 facing the chamber 14. By using the bonding force of the above polymer layer, the integrity of the separator and the housing 1 is improved, internal short circuit caused by the shrinkage of the separator is much less likely, and the housing 1 can also be prevented from cracking at the same time.

In the related art, the electrochemical energy storage device further includes a working compartment, the housing is located in the working compartment. When the electrochemical energy storage device is dropped or impacted, a collision between the housing and the working compartment is likely, causing the housing to crack and break.

As shown in FIG. 3, in an exemplary embodiment of the present disclosure, the surface of the third side wall 13 away from the chamber 14 is coated with bonding glue, forming the polymer layer on the surface of the third side wall 13 away from the chamber 14. By using the bonding force of the above polymer layer, the integrity of the housing 1 and the working compartment is improved, and cracks of the housing 1 caused by the collision between the housing 1 and the working compartment are much less likely.

As shown in FIG. 8, in other exemplary embodiment of the present disclosure, the surface of the first side wall 11 away from the chamber 14 is coated with bonding glue, forming the polymer layer on the surface of the first side wall 11 away from the chamber 14. By using the bonding force of the above polymer layer, the integrity of the housing 1 and the working compartment is improved, and cracks of the housing 1 caused by the collision between the housing 1 and the working compartment will not occur.

As shown in FIG. 8, in other exemplary embodiment of the present disclosure, the surface of the first side wall 11 away from the chamber 14 is coated with bonding glue, forming the polymer layer on the surface of the first side wall 11 away from the chamber 14. By using the bonding force of the above polymer layer, the integrity of the housing 1 and the working compartment is improved, and cracks of the housing 1 caused by the collision between the housing 1 and the working compartment are prevented.

As shown in FIG. 10, in an exemplary embodiment of the present disclosure, the surface of the second side wall 12 away from the chamber 14 is coated with bonding glue, forming the polymer layer on the surface of the second side wall 12 away from the chamber 14. By using the bonding force of the above polymer layer, the integrity of the housing 1 and the working compartment is improved, and cracks of the housing 1 caused by the collision between the housing 1 and the working compartment are prevented.

According to some embodiments of the present disclosure, the reinforcing layer is an adhesive tape. The adhesive paper has the advantages of simple structure, easy assembly, and low cost. Optionally, the adhesive tape may be single-sided adhesive tape or double-sided adhesive tape.

In some embodiments of the present disclosure, the battery cell 2 has a width of L1 (shown in FIGS. 6 and 9), and the reinforcing layer 2 has a length of L2 in the width direction of the battery cell 3 (shown in FIGS. 6 and 9), wherein L2≥0.5L1. Therefore, the protective effect of the reinforcing layer 2 on the housing 1 is improved, and the reliability and safety of the electrochemical energy storage device 100 can be further improved.

For example, the length L2 of the reinforcing layer 2 in the width direction of the battery cell 3 canbe0.6L1, 0.7L1, 0.8L1, 0.9L1, or L1. Specifically, the length L2 of the reinforcing layer 2 in the width direction of the battery cell 3 can be designed and manufactured according to the model, size, and application environment of the battery cell 3.

According to some embodiments of the present disclosure, the electrochemical energy storage device 100 is a battery. Batteries are easy to carry and transport, the application environment of batteries is relatively diverse, and the demand for batteries is relatively wide. The battery may be a primary battery or a secondary battery. Of course, this disclosure is not limited to this, and the electrochemical energy storage device can also be a capacitor.

After the battery cell 3 is assembled with the housing 1, the processes of charge formation, negative pressure extraction, and capacity testing must be carried out, and then the housing 1 with the battery cell 3 can be placed in the working compartment, thereby completing the assembly of the electrochemical energy storage device 100.

Test experiments were performed on the electrochemical energy storage devices 100 of a portion of the above examples and (comparative example 1) an energy storage device without the reinforcement layer 2 in the related art. The experimental conditions are as follows. The electrochemical energy storage device 100 of the above examples and the energy storage device without the reinforcement layer 2 in the related art is placed into a roller for testing, and the rotation speed of the roller is 3-4 circles/min, the height of the roller is 1m, and the roller rotates 250 circles for each experiment. The measured voltage and internal resistance are taken out at 75 circles, 150 circles, and 250 circles. After the drop is completed, the battery cell 3 is taken out and placed at room temperature for 72 hours, and the voltage is measured every 24 hours. After 72h, the initial voltage is used as the reference, if the voltage drop of the electrochemical energy storage device 100 is less than 30mv, the electrochemical energy device is passed. Examination for cracking is carried out to count a cracking proportion.

The test results are shown in Table 1.

**TABLE 1**

| | **Pass rate of voltage drop** | **Cracking proportion** |
|---|---|---|
| Comparative example 1 | 10/20 | 18/20 |
| Example 1 | 20/20 | 0/20 |
| Example 2 | 20/20 | 2/20 |
| Example 3 | 20/20 | 3/20 |
| Example 4 | 20/20 | 0/20 |
| Example 5 | 19/20 | 5/20 |
| Example 6 | 18/20 | 18/20 |
| Example 7 | 12/20 | 18/20 |
| Example 8 | 11/20 | 7/20 |

Research shows that the reinforcement layer 2 being applied on the side of the first side wall 11 of the housing 1 close to the chamber 14 significantly improves the pass rate in relation to voltage drop of the electrochemical energy storage device 100, and applying the reinforcing layer 2 on the side of the first side wall 11, the second side wall 12, or the third side wall 13 away from the chamber 14 significantly reduces the occurrence of cracks in the electrochemical energy storage device 100.

It is to be understood, even though information and advantages of the present embodiments have been set forth in the foregoing description, together with details of the structures and functions of the present embodiments, the disclosure is illustrative only; changes may be made within the principles of the present embodiments to the full extent indicated by the plain meaning of the terms in which the appended claims are expressed.

## Claims

1. An electrochemical energy storage device **characterized in that** it comprises
a housing comprising a first side wall and a second side wall opposite to the first side wall, and defining a chamber configured for receiving a battery cell, the chamber being located between the first side wall and the second side wall;
wherein at least one of the first side wall and the second side wall is provided with a reinforcing layer.

2. The electrochemical energy storage device of claim 1, **characterized in that** the electrochemical energy storage device further comprises the battery cell, an electrode tab of the battery cell protruding out of the chamber from the first side wall, the reinforcing layer being on the second side wall.

3. The electrochemical energy storage device of claim 2, **characterized in that** the reinforcing layer is disposed on a surface of the second side wall facing the chamber.

4. The electrochemical energy storage device of claim 2, **characterized in that** the reinforcing layer is disposed on a surface of the second side wall away from the chamber.

5. The electrochemical energy storage device of any one of claims 2-4, **characterized in that** the reinforcing layer is disposed on a surface of the first side wall away from the chamber.

6. The electrochemical energy storage device of any one of claims 2-4, **characterized in that** the housing further comprises a third side wall, the third side wall is adjacent to the second side wall, the reinforcing layer is disposed on a surface of the third side wall away from the chamber.

7. The electrochemical energy storage device of claim 1, **characterized in that** the reinforcing layer is a polymer layer.

8. The electrochemical energy storage device of claim 1, **characterized in that** the reinforcing layer is an adhesive tape.

9. The electrochemical energy storage device of claim 2, **characterized in that** the battery cell has a width of LI, the reinforcing layer has a length of L2 in the width direction of the battery cell, wherein L2≥0.5L1.

10. The electrochemical energy storage device of claim 1, **characterized in that** the electrochemical energy storage device is a battery.
